# EUROPÄISCHE PATENTSCHRIFT

(11) **EP 2 330 029 B1**
(45) Veröffentlichungstag und Bekanntmachung des Hinweises auf die Patenterteilung: **19.07.2017**
(21) Anmeldenummer: 10008958.0
(22) Anmeldetag: 27.08.2010
(51) Int. Cl.: B63H 21/32, B63G 8/12, F01N 3/00, B01F 5/04, B01F 15/02, B01F 3/04, B63G 8/34

(54) **Unterseeboot mit einer Anlage zur Ausbringung von Gas**
Submarine with an assembly for outputting gas
Sous-marin doté d'une installation destinée à la sortie de gaz

(30) Priorität: 29.10.2009 DE 102009051308
(43) Veröffentlichungstag der Anmeldung: 08.06.2011
(73) Patentinhaber: ThyssenKrupp Marine Systems GmbH, 24143 Kiel (DE)
(72) Erfinder: Krummrich, Stefan, Dipl.-Ing., 24634 Padenstedt (DE); Dau, Hendrik Marc, Dipl.-Ing., 24149 Kiel (DE); Panoch, Axel, Dipl.-Ing., 24582 Bordesholm (DE); Teppner, Randolf, Dr. rer. nat., 25451 Quickborn (DE); Althorn, Silke, Dipl.-Ing., 24357 Güby/Esprehm (DE)
(74) Vertreter: thyssenkrupp Intellectual Property GmbH

(56) Entgegenhaltungen:
- DE-C1- 10 061 487
- FR-A1- 2 836 983
- JP-A- H0 411 920
- REGENSDORF U: "DER KREISLAUFDIESEL ALS AUSSENLUFTUNABHANGIGER ANTRIEB FUER UBOOTE", 1. Juli 1992 (1992-07-01), SCHIFF UND HAFEN, SEEHAFEN VERLAG GMBH, DE, PAGE(S) 43 - 46, XP000287420, ISSN: 1436-8498 * das ganze Dokument *

## Beschreibung

Die Erfindung betrifft ein Unterseeboot mit einer Anlage zum Ausbringen von Gas aus dem Unterseeboot.

Insbesondere beim Betrieb außenluftunabhängiger Antriebsanlagen stellt sich häufig die Aufgabe, aus abgetauchten Unterseebooten Gas signaturarm auszubringen. Dazu ist es beispielsweise aus EP 1 252 058 B1 bekannt, auszubringendes Gas in Form von Kohlendioxid zunächst mit einem Absorber in Seewasser zu lösen und die Lösung anschließend aus dem Unterseeboot auszubringen. Gleichwohl bleibt dabei häufig ein gewisser Anteil des Kohlendioxids im Seewasser ungelöst, sodass beim Ausbringen der Lösung ein Blasenschleier entsteht. Dieser Blasenschleier führt nachteilig zu einer leichteren Ortbarkeit des Unterseeboots.

Auch aus der FR 2 836 983 A1 ist eine Anlage zum Ausbringen von Gas aus einem Unterseeboot bekannt.

Es ist daher Aufgabe der Erfindung, ein in dieser Hinsicht verbessertes Unterseeboot mit einer Anlage zum Ausbringen von Gas aus dem Unterseeboot bereitzustellen. Es ist ferner Aufgabe der Erfindung, bei dem Unterseeboot die Anlage energieeffizient und einfach auszubilden.

Diese Aufgabe wird erfindungsgemäß durch ein Unterseeboot mit den in Anspruch 1 angegebenen Merkmalen gelöst. Vorteilhafte Ausgestaltungen sind in den Unteransprüchen, der nachfolgenden Beschreibung und der Zeichnung angegeben.

Das erfindungsgemäße Unterseeboot weist eine Anlage zum Ausbringen von Gas aus dem Unterseeboot auf. Die Anlage umfasst eine Mehrphasenpumpe, welche das Gas zusammen mit Seewasser fördert und zumindest teilweise im Seewasser in Lösung bringt. Ferner sind bei dem Unterseeboot Mittel zum Ausbringen der Lösung aus dem Unterseeboot vorhanden. Die Mehrphasenpumpe der erfindungsgemäßen Anlage ermöglicht zum einen ein zuverlässiges Lösen des Gases in Seewasser. Ferner gibt die Mehrphasenpumpe an ihrer Druckseite ggf. ungelöstes Gas in besonders kleinen Blasen mit dem Seewasser ab. Damit lässt sich bei dem erfindungsgemäßen Unterseeboot die Lösung bzw. Gas besonders signaturarm ausbringen. Weiterhin stellt die Mehrphasenpumpe zugleich ein Fördermittel dar, welches den Gas- sowie den Seewasserfluss zur Saugseite der Mehrphasenpumpe sowie den Fluss der Lösung und ggf. ungelösten Gases von der Druckseite der Mehrphasenpumpe fort bewirkt. Die Mehrphasenpumpe treibt folglich zugleich den Fluidfluss der Anlage. Da mit der Mehrphasenpumpe eine einzige Komponente der Anlage sowohl den Gaseintrag ins Seewasser als auch den Fluidfluss bewerkstelligt, kann die Anlage bei dem erfindungsgemäßen Unterseeboot energieeffizient und zugleich sehr einfach ausgelegt werden.

Bevorzugt ist der Mehrphasenpumpe eine Mischeinrichtung vorgeschaltet, die das Gas mit Seewasser mischt. Diese Mischeinrichtung umfasst einen porösen Körper wie es beispielsweise aus EP 1 252 058 bekannt ist, auf die in diesem Zusammenhang verwiesen wird. Vorteilhaft wird das Gas über die Mischeinrichtung mit dem Seewasser zusammengeführt. Erfindungsgemäss ist bei dem Unterseeboot der Mehrphasenpumpe eine Gasabscheidevorrichtung nachgeschaltet. Die Gasabscheidevorrichtung scheidet im Seewasser ungelöstes Gas von der Lösung ab, so dass der negative Einfluss auf die Signatur des Unterseeboots beim Ausbringen der Lösung gering gehalten werden kann.

Zweckmäßigerweise ist die Gasabscheidevorrichtung zur gravitativen Abscheidung des Gases von der Lösung bzw. vom Seewasser ausgebildet.

Bevorzugt umfasst die Gasabscheidevorrichtung Mittel zum Erzeugen einer vertikalen Abwärtsströmung der Lösung mit einer solchen Vertikalströmungsgeschwindigkeit, die der Auftriebsgeschwindigkeit von Blasen eines vorbestimmten Volumens gleicht. Diese Weiterbildung der Erfindung nutzt den Umstand, dass die Auftriebsgeschwindigkeit von Blasen in einer Flüssigkeit mit dem Volumen der Blasen wächst. Wird die Lösung wie zuvor beschrieben vertikal abwärts geströmt, so bewegen sich Blasen mit einem kleineren als dem vorbestimmten Volumen mit der Lösung abwärts. Blasen mit einem größeren als dem vorbestimmten Volumen hingegen steigen in der Lösung vertikal aufwärts. Die Mittel zur vertikalen Abwärtsströmung der Lösung bilden daher quasi einen Filter, welchen nur Blasen mit einem hinreichend geringen Volumen passieren können. Auf diese Weise werden Blasen, deren Volumen das vorbestimmte Volumen überschreitet, an der Ausströmung aus der Gasabscheidevorrichtung gehindert. Somit enthält die Lösung beim Ausbringen aus dem Unterseeboot allenfalls Blasen mit einem kleineren als dem vorbestimmten Volumen. Da lediglich ein Mindestvolumen überschreitende Blasen die Signatur des Unterseebootes negativ beeinflussen, kann die Signatur des Unterseebootes klein gehalten werden, indem das vorbestimmte Volumen geeignet gewählt wird. Zweckmäßigerweise weisen die Mittel zur vertikalen Abwärtsströmung der Lösung einen zumindest mit vertikaler Strömungskomponente durchströmbaren Behälter bzw. Kanal auf, dessen horizontaler Querschnitt durch die erforderliche Vertikalströmungsgeschwindigkeit festgelegt ist.

Geeigneterweise ist bei dem Unterseeboot eine Gasrückführung von der Gasabscheidevorrichtung zur Saugseite der Mehrphasenpumpe oder, sofern vorgesehen, zur Mischeinrichtung vorhanden. Da gemäß der Erfindung das Gas von der Druckseite der Mehrphasenpumpe rückgeführt wird, ist die Anordnung zusätzlicher aktiver Elemente, beispielsweise eines Kompressors, in/an der Rückführung entbehrlich.

Zweckmäßigerweise ist die Gasrückführung geregelt. Dazu weist die Gasrückführung eine Rückführungsleitung mit einem regelbaren Ventil, beispielsweise einem Regelventil oder einem regelbaren Absperrventil, auf, wobei die Menge in der Abscheidevorrichtung gesammelten Gases die Regelgröße und die Einstellung des Ventils die Stellgröße bildet. Beispielsweise wird die Rückführungsleitung über das Ventil erst dann geöffnet, wenn sich in der Gasabscheidevorrichtung ein hinreichend hohes Gasvolumen angesammelt hat bzw. anzusammeln beginnt. Eine Rückführung von Gas und damit einhergehend eine Belastung der Mehrphasenpumpe erfolgt somit erst dann, wenn nicht genügend Gas in Lösung gebracht wird und/oder im Seewasser ungelöstes Gas Blasen mit einem Volumen bildet, welches größer als das vorbestimmte Volumen ist.

In einer bevorzugten Weiterbildung der Erfindung ist bei dem Unterseeboot ein Kühlwassersystem mit einer Kühlwasserpumpe vorhanden. Dabei bildet die Mehrphasenpumpe die Kühlwasserpumpe. In dieser Weiterbildung bedingt die Anlage zur Ausbringung von Gas aus dem Unterseeboot keinen erhöhten Energiebedarf. Vielmehr greift die Anlage auf ohnehin an Bord des Unterseebootes vorhandene Ressourcen zurück. Zweckmäßigerweise sind dabei die Mehrphasenpumpe und gegebenenfalls die Mischeinrichtung den Rückkühlern des Kühlwassersystems nachgeordnet.

Bevorzugt weist bei dem Unterseeboot die Anlage Druckerhöhungsmittel auf, die zur Erhöhung des Drucks des Gases auf den Tauchdruck ausgebildet sind. Somit wird ein hoher Gaseintrag bei der Lösung des Gases im Seewasser erreicht.

Alternativ oder zusätzlich weist bei dem Unterseeboot die Anlage Druckverringerungsmittel auf, die zur Verringerung des Drucks des in das Unterseeboot eingelassenen Seewassers auf den Druck des Gases ausgebildet sind.

Beispielsweise sind Ventile vorgesehen, mittels welchen in das Unterseeboot Seewasser von außenbords also außerhalb des Druckkörpers befindlichen Seewassers aufgenommen werden kann. Druckminderungsventile entlasten das eingelassene Seewasser auf den Gasdruck.

Bevorzugt ist bei dem Unterseeboot die Anlage mit zumindest einem abgasenden Teil einer insbesondere außenluftunabhängigen Antriebsanlage, beispielsweise einem Reformer eines Reformer-Brennstoffzellensystems, verbunden. So gast beispielsweise ein Reformer kohlendioxidhaltiges Abgas ab. Dieses Abgas kann bei dem erfindungsgemäßen Unterseeboot mittels der Anlage zur Ausbringung von Gas aus dem Unterseeboot signaturarm aus dem Unterseeboot ausgebracht werden, da Kohlendioxid eine hohe Wasserlöslichkeit aufweist. Bei der Antriebsanlage kann es sich beispielsweise auch um einen Dieselmotor, insbesondere einen Closed-Cycle-Dieselmotor, ein Stirling-System oder ein Kreislauf-Dampfturbinen-System (z. B. MESMA) handeln.

Vorteilhafterweise weist das Unterseeboot eine Regelungseinrichtung auf, welche zur Erfassung einer die Signatur des Unterseeboots beeinflussenden Größe als Regelgröße und zur Stellung typischerweise der Leistung und/oder der Drehzahl der Mehrphasenpumpe als Stellgröße(n) ausgebildet ist. Die Signatur des Unterseeboots kann dabei beispielsweise akustisch und/oder optisch sein sowie auch durch Wärme bzw. durch den pH-Wert des ausgelassenen Seewassers bedingt sein. Bevorzugt ist die Regelgröße die Größe oder die Menge der im Seewasser durch ungelöstes Gas gebildeten Blasen. Wird beispielsweise das Gas dem Seewasser bei sehr hohem Tauchdruck zugeführt, so weist das Seewasser eine hohe Lösungsfähigkeit für das Gas auf und/oder die infolge des ausgasenden Gases entstehenden Blasen sind derart klein, dass sie die Signatur des Unterseebootes beim Ausbringen nicht beeinflussen. In diesem Falle lässt sich die Mehrphasenpumpe mit deutlich verringerter Leistung betreiben. Regelgrößen können ferner der Wasserdurchfluss durch die Mehrphasenpumpe oder der Wasserausfluss bei der Ausbringung des Gases mit dem Seewasser aus dem Unterseeboot sein, insbesondere bei einer gegebenen Drehzahl der Mehrphasenpumpe. So hängt die Menge bzw. der Anteil des Gases am Seewasser/Gas-Gemisch beim Ausbringen aus dem Unterseeboot mit dem Wasserdurchfluss bzw. dem Wasserausfluss unmittelbar zusammen. Beispielsweise wird mittels der Regeleinrichtung die Mehrphasenpumpe bei höheren Gasanteilen des geförderten bzw. aus dem Unterseeboot ausgebrachten Seewasser/Gas-Gemischs auf höhere Drehzahlen geregelt. Weiterhin können Parameter des Kühlwassersystems die Regelgröße bilden, sofern die Mehrphasenpumpe zugleich als Kühlwasserpumpe fungiert. Ferner können der pH-Wert, die Temperatur (etwa hinsichtlich der IR-Signatur) oder geänderte akustische Eigenschaften des austretenden Seewassers als Regelgröße herangezogen werden.

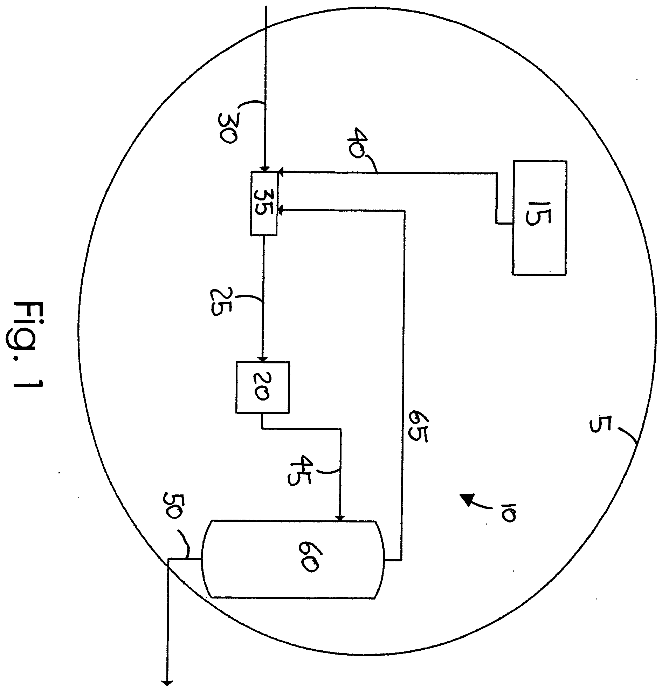

Nachfolgend wird die Erfindung anhand eines in der Zeichnung dargestellten Ausführungsbeispiels näher erläutert. Dazu zeigt Fig. 1 in schematischer Blockdarstellung den Druckkörper 5 eines erfindungsgemäßen Unterseeboots mit einer Anlage 10 zur Ausbringung von Gas aus dem Unterseeboot. In dem gezeigten Ausführungsbeispiel ist die Anlage 10 mit einem kohlendioxidhaltiges Gas abgebenden Teil einer Antriebsanlage, hier einem Reformer 15 eines Reformer-Brennstoffzellensystems, verbunden. Grundsätzlich kann es sich bei dem Gas abgebenden Teil auch um einen Teil eines Dieselmotors, beispielsweise eines Closed-Cycle-Dieselmotors, eines Stirling-Systems, eines Kreislauf-Dampfturbinen-Systems (z. B. MESMA) oder um eine anderweitige Gasquelle handeln.

Die Anlage 10 zur Ausbringung von Gas aus dem Unterseeboot weist eine Mehrphasenpumpe 20 auf. Die Mehrphasenpumpe 20 fördert über eine saugseitige Leitung 25 ein Gemisch aus vom Reformer 15 abgegebenem Gas und in den Druckkörper 5 eingebrachtem Seewasser. Dazu wird Seewasser über eine Leitung 30 in den Druckkörper 5 eingebracht. Die Leitung 30 ist mit der Leitung 25, die das Gemisch zur Saugseite der Mehrphasenpumpe 20 führt, über einen porösen Körper 35 verbunden, wie er beispielsweise in EP 1 252 058 beschrieben ist. Darüber hinaus wird dem porösen Körper 35 das vom Reformer 15 abgegebene Gas über eine Leitung 40 zugeführt. Mittels des porösen Körpers 35 wird das Gas des Reformers 15 mit dem Seewasser vermischt und gelangt in die zur Mehrphasenpumpe 20 führende saugseitige Leitung 25.

Die Mehrphasenpumpe 20 bringt einen Teil des Gases in Seewasser in Lösung und gibt die Lösung zusammen mit im Seewasser ungelöstem Abgas druckseitig über die Leitung 45 aus. Die Leitung 45 ist mit Ausbringungsmitteln zur Ausbringung der Lösung aus dem Unterseeboot in Form einer aus dem Unterseeboot herausführenden Leitung 50 über einen Gasabscheider 60 verbunden. Der Gasabscheider 60 trennt im Seewasser ungelöstes Gas von der Lösung, so dass die über die aus dem Unterseeboot 5 herausführende Leitung 50 ausgebrachte Lösung die Signatur des Unterseeboots nicht negativ beeinflusst.

Der Gasabscheider 60 weist dazu einen, im gezeigten Ausführungsbeispiel im Wesentlichen zylindrischen, Behälter auf, der einen vertikalen Strömungspfad für die Lösung bildet. Grundsätzlich kann der vertikale Strömungspfad für die Lösung auch durch einen anderweitig geeignet geformten Behälter gebildet sein. In diesem vertikalen Strömungspfad wird die Lösung mit einer solchen Vertikalströmungsgeschwindigkeit abwärts geströmt, die der Auftriebsgeschwindigkeit von Blasen des Gases mit einem vorbestimmten Volumen entspricht. Dieses vorbestimmte Volumen entspricht dabei derjenigen Blasengröße, unterhalb welcher aus dem Unterseeboot austretende Blasen die Signatur des Unterseeboots nicht nennenswert beeinflussen. Blasen mit einem kleineren Volumen als dem vorbestimmten Volumen gelangen über den Gasabscheider 60 in die aus dem Druckkörper 5 und dem Unterseeboot herausführende Leitung 50. Blasen mit einem größeren Volumen als dem vorbestimmten Volumen steigen im Behälter des Gasabscheiders 60 vertikal aufwärts und sammeln sich in einem oberen, oberhalb eines für die druckseitig von der Mehrphasenpumpe 20 ausgehende Leitung 45 angeordneten Einlasses.

Das derart gravitativ von der Lösung abgeschiedene, ungelöste Gas gelangt in eine Rückführungsleitung 65, die das Gas zurück zum porösen Körper 35 führt. Auf diese Weise wird das zurückgeführte Gas über den porösen Körper 35 erneut mit Seewasser vermischt und über die Leitung 25 zur Mehrphasenpumpe 20 geführt.

Die Rückführungsleitung 65 weist optional ein (in der Zeichnung nicht dargestelltes) Entlüftungsventil auf, welches die Rückführungsleitung 65 erst dann öffnet, wenn sich im Behälter des Gasabscheiders 60 ein hinreichend großes Gasvolumen durch abgeschiedenes Gas bildet. Eine Rückführung von Gas und eine damit einhergehende Belastung der Mehrphasenpumpe 20 erfolgt somit erst dann, wenn nicht genügend Gas in Lösung gebracht wird und/oder im Seewasser ungelöstes Gas Blasen mit einem Volumen, welches größer als das vorbestimmte Volumen ist, bildet.

### Bezugszeichenliste

- 5: - Druckkörper
- 10: - Anlage
- 15: - Reformer
- 20: - Mehrphasenpumpe
- 25: - Leitung
- 30: - Leitung
- 35: - poröser Körper
- 40: - Leitung
- 45: - Leitung
- 50: - Leitung
- 60: - Gasabscheider
- 65: - Rückführungsleitung

## Patentansprüche

1. Unterseeboot mit einer Anlage (10) zum Ausbringen von Gas aus dem Unterseeboot, mit einer Mehrphasenpumpe (20), welche das Gas zusammen mit Seewasser fördert und zumindest teilweise im Seewasser in Lösung bringt, und mit Mitteln (50) zum Ausbringen der Lösung aus dem Unterseeboot, **dadurch gekennzeichnet, dass** der Mehrphasenpumpe (20) eine Gasabscheidevorrichtung (60) nachgeschaltet ist.

2. Unterseeboot nach Anspruch 1, bei welchem der Mehrphasenpumpe (20) eine Mischeinrichtung (35) vorgeschaltet ist, die das Gas mit Seewasser mischt.

3. Unterseeboot nach Anspruch 2, bei welchem die Mischeinrichtung (35) einen porösen Körper aufweist.

4. Unterseeboot nach einem der vorhergehenden Ansprüche, bei welchem die Gasabscheidevorrichtung (60) zur gravitativen Abscheidung des Gases von der Lösung bzw. vom Seewasser ausgebildet ist.

5. Unterseeboot nach einem der vorhergehenden Ansprüche, bei welchem die Gasabscheidevorrichtung (60) Mittel zum Erzeugen einer vertikalen Abwärtsströmung der Lösung mit einer solchen Vertikalströmungsgeschwindigkeit, die der Auftriebsgeschwindigkeit von Blasen eines vorbestimmten Volumens gleicht, aufweist.

6. Unterseeboot nach einem der vorhergehenden Ansprüche, bei welchem eine Gasrückführung (65) von der Gasabscheidevorrichtung (60) zur Saugseite der Mehrphasenpumpe (20) oder der Mischeinrichtung (35) vorhanden ist.

7. Unterseeboot nach Anspruch 6, bei welchem die Gasrückführung (65) eine Rückführungsleitung mit einem regelbaren Ventil aufweist, wobei die Gasrückführung geregelt ist mit der Einstellung des Ventils als Stellgröße und der Menge in der Gasabscheidevorrichtung gesammelten Gases als Regelgröße.

8. Unterseeboot nach einem der vorhergehenden Ansprüche, bei welchem ein Kühlwasserkreislauf mit einer Kühlwasserpumpe vorhanden ist, wobei die Mehrphasenpumpe (20) die Kühlwasserpumpe bildet.

9. Unterseeboot nach einem der vorhergehenden Ansprüche, bei dessen Anlage (10) Druckerhöhungsmittel vorgesehen sind, die zur Erhöhung des Drucks des Gases auf den Tauchdruck ausgebildet sind.

10. Unterseeboot nach einem der vorhergehenden Ansprüche, bei dessen Anlage (10) Druckverringerungsmittel vorgesehen sind, die zur Verringerung des Drucks des in das Unterseeboot eingelassenen Seewassers auf den Druck des Gases ausgebildet sind.

11. Unterseeboot nach einem der vorhergehenden Ansprüche, bei welchem die Anlage (10) mit zumindest einem abgasenden Teil einer Antriebsanlage, insbesondere einem Reformer (15) eines Reformer-Brennstoffzellensystems, verbunden ist.

12. Unterseeboot nach einem der vorhergehenden Ansprüche, bei welchem eine Regelungseinrichtung vorgesehen ist, welche zur Erfassung einer die Signatur des Unterseeboots beeinflussendenGrößeals Regelgröße und zur Stellung der Leistung und/oder der Drehzahl der Mehrphasenpumpe (20) als Stellgröße(n) ausgebildet ist.

## Claims

1. Submarine having a system (10) for outputting gas from the submarine, having a multi-phase pump (20) which feeds the gas together with seawater and causes it to at least partially dissolve in the seawater, and having means (50) for discharging the solution from the submarine, **characterized in that** a gas precipitation device (60) is connected downstream of the multi-phase pump (20).

2. Submarine according to Claim 1, in which a mixing device (35) which mixes the gas with seawater is connected upstream of the multi-phase pump (20).

3. Submarine according to Claim 2, in which the mixing device (35) has a porous body.

4. Submarine according to one of the preceding claims, in which the gas precipitation device (60) is designed to perform gravitational precipitation of the gas from the solution or from the seawater.

5. Submarine according to one of the preceding claims, in which the gas precipitation device (60) has means for generating a vertical downward flow of the solution with such a vertical flowrate which is equal to the uplift speed of bubbles of a predetermined volume.

6. Submarine according to one of the preceding claims, in which gas recirculation (65) occurs from the gas precipitation device (60) to the suction side of the multi-phase pump (20) or of the mixing device (35).

7. Submarine according to Claim 6, in which the gas recirculation (65) has a recirculation line with an adjustable valve, wherein the gas recirculation is regulated with the setting of the valve as a manipulated variable and the quantity of gas collected in the gas precipitation device as a control variable.

8. Submarine according to one of the preceding claims, in which a cooling water circuit with a cooling water pump is present, wherein the multi-phase pump (20) forms the cooling water pump.

9. Submarine according to one of the preceding claims, in the system (10) of which pressure-increasing means are provided which are designed to increase the pressure of the gas to the immersion pressure.

10. Submarine according to one of the preceding claims, in the system (10) of which pressure-reduction means are provided which are designed to reduce the pressure of the seawater which is let into the submarine to the pressure of the gas.

11. Submarine according to one of the preceding claims, in which the system (10) is connected to at least one gas emission part of a drive system, in particular a reformer (15) of a reformer fuel cell system.

12. Submarine according to one of the preceding claims, in which a control device is provided which is designed to sense a variable which influences the signature of the submarine as a control variable and to set the power and/or the rotational speed of the multi-phase pump (20) as a manipulated variable/manipulated variables.

## Revendications

1. Sous-marin comprenant un équipement (10) destiné à évacuer du gaz hors du sous-marin, comprenant une pompe polyphasée (20) qui refoule le gaz conjointement avec de l'eau de mer et le dissout au moins partiellement dans l'eau de mer, et comprenant des moyens (50) destinés à évacuer la solution hors du sous-marin, **caractérisé en ce qu'**un dispositif séparateur de gaz (60) est branché en aval de la pompe polyphasée (20).

2. Sous-marin selon la revendication 1, dans lequel un appareil mélangeur (35) qui mélange le gaz avec de l'eau de mer est branché en amont de la pompe polyphasée (20).

3. Sous-marin selon la revendication 2, dans lequel l'appareil mélangeur (35) possède un corps poreux.

4. Sous-marin selon l'une des revendications précédentes, dans lequel le dispositif séparateur de gaz (60) est configuré pour la séparation par gravité du gaz de la solution ou de l'eau de mer.

5. Sous-marin selon l'une des revendications précédentes, dans lequel le dispositif séparateur de gaz (60) possède des moyens pour générer un courant descendant vertical de la solution avec une vitesse d'écoulement verticale telle qu'elle est identique à la vitesse ascensionnelle de bulles ayant un volume prédéfini.

6. Sous-marin selon l'une des revendications précédentes, dans lequel il existe un retour de gaz (65) du dispositif séparateur de gaz (60) vers le côté aspiration de la pompe polyphasée (20) ou de l'appareil mélangeur (35).

7. Sous-marin selon la revendication 6, dans lequel le retour de gaz (65) possède une conduite de retour pourvue d'une vanne à régulation, le retour de gaz étant régulé avec le réglage de la vanne en tant que grandeur de réglage et la quantité de gaz collecté dans le dispositif séparateur de gaz en tant que quantité de régulation.

8. Sous-marin selon l'une des revendications précédentes, dans lequel il existe un circuit d'eau de refroidissement comprenant une pompe à eau de refroidissement, la pompe polyphasée (20) formant la pompe à eau de refroidissement.

9. Sous-marin selon l'une des revendications précédentes, dont l'équipement (10) comporte des moyens d'augmentation de la pression qui sont conçus pour augmenter la pression du gaz à la pression de plongée.

10. Sous-marin selon l'une des revendications précédentes, dont l'équipement (10) comporte des moyens de réduction de la pression qui sont conçus pour réduire la pression de l'eau de mer qui pénètre dans le sous-marin à la pression du gaz.

11. Sous-marin selon l'une des revendications précédentes, dont l'équipement (10) est relié avec au moins une partie d'échappement des fumées d'un système de propulsion, notamment un reformeur (15) d'un système de piles à combustible à reformeur.

12. Sous-marin selon l'une des revendications précédentes, dans lequel il existe un appareil de régulation qui est conçu pour détecter en tant que grandeur de régulation une grandeur qui influence la signature du sous-marin et pour régler la puissance et/ou la vitesse de rotation de la pompe polyphasée (20) en tant que grandeur(s) de réglage.
